# NEW EUROPEAN PATENT SPECIFICATION

(11) **EP 1 511 816 B2**
(45) Date of publication and mention of the opposition decision: **06.01.2021**
(45) Mention of the grant of the patent: 17.09.2008
(21) Application number: 03741936.3
(22) Date of filing: 12.06.2003
(51) Int. Cl.: C09D 127/06, C09D 7/12

(54) **COATING COMPOSITION HAVING POLYVINYL CHLORIDE EXTENDER PARTICLES**
BESCHICHTUNGSZUSAMMENSETZUNG ENTHALTEND POLYVINYLCHLORID FÜLLSTOFFTEILCHEN
COMPOSITION DE REVETEMENT PRESENTANT DES PARTICULES DE MATIERE DE CHARGE EN CHLORURE DE POLYVINYLE

(30) Priority: 12.06.2002 US 388413 P
(43) Date of publication of application: 09.03.2005
(73) Proprietor: Sherwin-Williams Luxembourg Investment Management Company S.à r.l., 1857 Luxembourg (LU)
(72) Inventor: REUTER, James, M., Cleveland Heights, OH 44106 (US); DUKLES, Jean, M., Fairview Park, OH 44126 (US); KLIMOVICH, David, F., Mentor, OH 44060 (US); VOURLOGIANES, Nick, Beachwood, OH 44122 (US); ZIELINSKI, Keith, T., Tucker, Georgia 30084 (US)
(74) Representative: Dannenberger, Oliver Andre
(86) International application number: PCT/US2003/018532
(87) International publication number: WO 2003/106574

(56) References cited:
- EP-A- 0 352 804
- EP-A- 0 513 883
- EP-A- 0 727 466
- JP-B1- S 515 013
- PATENT ABSTRACTS OF JAPAN vol. 2000, no. 14, 5 March 2001 (2001-03-05) & JP 2000 309742 A (TOSOH CORP), 7 November 2000 (2000-11-07)
- RAWLE, A., The Basic Principles of Particle Size Analysis

## Description

### CROSS REFERENCE TO RELATED APPLICATIONS

This application claims the benefit of U.S. provisional application 60/388,413 filed on June 12, 2002, the entirety of which is hereby incorporated by reference.

### BACKGROUND OF THE INVENTION

This invention relates generally to coatings and more particularly to extenders for use in coating compositions.

Typically, a paint composition is composed of three general components: a liquid binder, pigment(s), including extenders, and additive(s), such as thickeners and biocides. The binder is usually a resinous material that converts to a solid to form a film that binds together the pigment particles of the paint composition.

Extenders are solid discrete particles of material that are insoluble in the liquid binder and are incorporated into paint compositions to modify the flow properties, gloss, surface topography, and/or the mechanical and permeability characteristics of the paint film. Typically, extenders are inorganic and are selected from the group comprising barytes, clay, mica, talc, calcium carbonate, silica and others. Polymer extenders, however, are also known.

Polymer extenders are often used as opacifying agents. More specifically, vesiculated polymer extenders are used in paint compositions to increase dry hiding by introducing air voids into the dried paint film. Examples of such vesiculated polymer extenders are described in U.S. Patent No. 4,572,869.

Polymer extenders have also been used to improve the durability of paint films. U.S. Patent No. 3,527,729 to Bingham discloses using elastomeric polymer extenders in paint compositions to improve mar resistance. In the Bingham patent, polyurethane particles in a size range from 5 to 75 microns are utilized. U.S. Patent No. 4,972, 030 to Bauman further discloses using high molecular weight polyethylene particles in paint compositions to improve abrasion resistance. In the Bauman patent, the polyethylene particles are surface treated to render the particles hydrophilic.

Heretofore, solid polyvinyl chloride particles have not been used in paint compositions as extenders. With regard to paints and other coatings, polyvinyl chloride is primarily used in plastisols, wherein the polyvinyl chloride is dispersed in a plasticizer, such as diethylene glycol dibenzoate. U.S. Patent No. 5,643,974 to Simpson discloses a composite pigmentary material for use in waterborne paint compositions, wherein the composite pigmentary material comprises particles of polyvinyl chloride associated with inorganic pigment particles, such as titanium dioxide. In the Simpson patent, the polyvinyl chloride particles are in a size range from 0.02 to 0.5 microns and function as spacers to reduce flocculation of the pigment particles, thereby enhancing opacity.

### SUMMARY OF THE INVENTION

In accordance with the present invention, a paint composition is provided that includes a liquid binder resin and about 5 to about 60 weight percent, based on the total weight of solids of the paint composition, of polyvinyl chloride extender particles having an average particle size in a range from 20 to 60 microns. The paint composition further includes a color pigment and is free of plasticizers.

Also provided in accordance with the present invention is a waterborne coating composition that has, on a solids basis, about 5 to about 50 weight percent, based on the total weight of solids of the water borne coating composition, of a water borne binder resin, and about 25 to about 50 weight percent, based on the total weight of solids of the waterborne coating composition, of polyvinyl chloride extender particles having an average particle size in a range from 20 to 60 microns.

### DETAILED DESCRIPTION OF THE INVENTION

Parts are parts by weight and percents are weight percents unless otherwise indicated or apparent.

As used herein, a "flat" paint composition is a paint composition that forms a dried paint film having a 60 and 85 degree gloss below about 5.

As used herein, a "satin" paint composition is a paint composition that forms a dried paint film having a 60 and 85 degree gloss from about 5 to about 25.

As used herein, "(meth)acrylate" denotes both "acrylate" and "methacrylate", and "(meth)acrylic" denotes both "methacrylic" and "acrylic."

As used herein, the term "opacifying pigment" shall mean a pigment having a refractive index greater than 1.8.

As used herein with regard to a paint composition, the term "pigment volume concentration" (hereinafter referred to as "PVC") means the ratio (expressed as a percentage) of the volume of pigment particles (both organic and inorganic, and including extender particles) to the volume of total non-volatile material (pigment particles and resin) present in the paint composition.

As used herein, the term "plasticizer" shall mean a nonaqueous, nonvolatile liquid medium that is compatible with polyvinyl chloride and when added to a coating composition containing polyvinyl chloride becomes a part of the dried film and increases film flexibility. Plasticizers, when admixed with the polyvinyl chloride would produce a gel, and ultimately a fully fused solid when the composition is heated. Examples of plasticizers include phthalic esters, dibasic esters, phosphoric esters, polyester-based plasticisers and especially dioctyl phthalate and diisononyl phthalate. The combination of plasticizers and vinyl resins, such as polyvinyl chloride, to produce plastisols and organosols is well-known in the art.

As used herein, the term "polyvinyl chloride" shall mean a homopolymer of vinyl chloride, or a copolymer of at least 80 weight percent of units derived from vinyl chloride, with up to about twenty weight percent of one or more other vinyl monomers.

As used herein, "tinting concentrate" shall mean a fluid pigment concentrate comprising highly concentrated levels of color pigment ground into a grinding vehicle. The most common grinding vehicle used in tinting concentrates is a blend of ethylene glycol and water in conjunction with various surfactants. Color pigments typically used include ferrite yellow oxide, red iron oxides, ferric iron oxide brown (which is a blend of red, yellow, and black iron oxides), tan oxide (which is a similar blend), raw sienna and burnt sienna, raw and burnt umber, copper phthalo cyanine green and blue, DNA orange (dinitroaniline orange #5), carbon black, lampblack, toluidine red, parachlor red, (burnt red and maroon red) hansa yellows which are azo coupling of metapara nitrotoluidiene and quinacridone red, magenta and violet. The amount of color pigment used in a tinting concentrate is typically from about 5 weight percent to about 70 weight percent, depending on the type of color pigment.

As used herein, "ambient drying" shall mean a coating that can cure or air dry to a final film when applied and allowed to cure or dry under ambient conditions typical of conventional architectural paint applications. Generally, the temperatures for such ambient conditions would range from about 35° F to about 100° F.

The present invention is directed toward a coating composition having polyvinyl chloride extenders in place of (or in addition to) conventional inorganic or organic extenders. The coating composition of the present invention may be used in a variety of different applications, but is particularly suited for use as an architectural paint. With regard to architectural applications, the coating composition provides a number of surprising benefits over conventional architectural paint compositions. Such benefits include: improved tint retention of the dried coating film upon weathering in natural or artificial UV light and moisture conditions; increased scrub resistance of the dried coating film; greater flexibility of the dried coating film for improved crack resistance; improved mar and burnish resistance of the dried coating film; increased barrier properties of the dried coating film with regard to the migration of tannin or other stains, as well as the migration of salts that lead to frosting or efflorescence; improved water barrier properties of the dried coating film; improved resistance to tannin migration; overall excellent film properties when cured or dried under ambient conditions; and the ability to maintain performance at increased PVC due to low binder demand.

The coating composition of the present invention generally includes one or more binder resins, polyvinyl chloride extender particles and additives. The coating composition is free of plasticizers. In the absence of plasticizers, the polyvinyl chloride extender particles remain as discrete particles in the film after the coating has cured or dried under ambient conditions.

The binder resin(s) can be any resin or combination of resins, excluding plasticizer resins. Resins that may be used include natural and synthetic oils, alkyds, modified alkyds and waterborne resins. Suitable waterborne resins include latex polymers formed by emulsion polymerization, polyester emulsions, water-reducible alkyd polymers, alkyd-acrylic dispersions, alkyd emulsions, fluoropolymer emulsions, silicone emulsions, polyethylene emulsions, polyurethane dispersions, polyamide dispersions and polyurethane-acrylic dispersions.

For architectural applications, the binder resin(s) is/are preferably waterborne resin(s) and more preferably latex polymer(s) formed by emulsion polymerization of at least one ethylenically unsaturated monomer in water using surfactants and water soluble initiators. Typical ethylenically unsaturated monomers include vinyl monomers, acrylic monomers, acid-functional monomers, allylic monomers and acrylamide monomers. For architectural applications, the binder resin(s) is/are preferably formed from vinyl monomers and/or acrylic monomers.

Suitable vinyl monomers include vinyl esters, vinyl aromatic hydrocarbons, vinyl aliphatic hydrocarbons, vinyl alkyl ethers and mixtures thereof. Examples of vinyl esters that may be used include vinyl acetate, vinyl propionate, vinyl laurate, vinyl pivalate, vinyl nonanoate, vinyl decanoate, vinyl neodecanoate, vinyl butyrates, vinyl benzoates, and vinyl isopropyl acetates. Examples of vinyl aromatic hydrocarbons that may be used include styrene, methyl styrenes and other lower alkyl styrenes, chlorostyrene, vinyl toluene, vinyl naphthalene and divinyl benzene. Examples of vinyl aliphatic hydrocarbons that may be used include vinyl chloride and vinylidene chloride as well as alpha olefins such as ethylene, propylene, isobutylene, as well as conjugated dienes such as 1,3 butadiene, methyl-2-butadiene, 1,3-piperylene, 2,3-dimethyl butadiene, isoprene, cyclohexene, cyclopentadiene, and dicyclopentadiene. Examples of vinyl alkyl ethers that may be used include methyl vinyl ether, isopropyl vinyl ether, n-butyl vinyl ether, and isobutyl vinyl ether.

Acrylic monomers suitable for use in the present invention include any compounds having acrylic functionality, such as alkyl (meth)acrylates, acrylic acids, as well as aromatic derivatives of (meth)acrylic acid, acrylamides and acrylonitrile. Typically, the alkyl (meth)acrylate monomers (also referred to herein as "alkyl esters of (meth)acrylic acid") will have an alkyl ester portion containing from 1 to 12, preferably about 1 to 5, carbon atoms per molecule. Suitable acrylic monomers include, for example, methyl (meth)acrylate, ethyl (meth)acrylate, butyl (meth)acrylate, propyl (meth)acrylate, 2-ethyl hexyl (meth)acrylate, cyclohexyl (meth)acrylate, decyl (meth)acrylate, isodecyl (meth)acrylate, benzyl (meth)acrylate, isobornyl (meth)acrylate, neopentyl (meth)acrylate, 1-adamatyl methacrylate and various reaction products such as butyl, phenyl, and cresyl glycidyl ethers reacted with (meth)acrylic acid, hydroxyl alkyl (meth)acrylates, such as hydroxyethyl and hydroxypropyl (meth)acrylates, amino (meth)acrylates, as well as acrylic acids such as (meth)acrylic acid, ethacrylic acid, alpha-chloroacrylic acid, alpha-cycanoacrylic acid, crotonic acid, beta-acryloxy propionic acid, and beta-styryl acrylic acid.

The binder resin(s) may be prepared using any of the well-known free-radical emulsion polymerization techniques used to formulate latex polymers. Polymerization techniques suitable for use herein are taught in U.S. Pat. No. 5,486,576.

The amount of the binder resin(s) in the coating composition of the present invention, on a solids basis, is preferably from about 5 to about 50 weight percent, more preferably from about 5 to about 30 weight percent, still more preferably from about 15 to about 25 weight percent, based on the total weight of solids of the coating composition.

As defined above, the polyvinyl chloride extender particles may be homopolymers of vinyl chloride or copolymers of at least 80 weight percent of units derived from vinyl chloride, with up to about twenty weight percent of one or more other vinyl monomers. Suitable vinyl monomers include alpha-olefins, such as ethylene and propylene; vinyl esters, such as vinyl acetate, vinyl propionate, and vinyl benzoate; vinylidene chloride; alkyl (meth)acrylates, such as methyl acrylate, lauryl acrylate, methyl methacrylate and cetyl methacrylate; vinyl aromatic monomers, such as styrene and vinyl toluene; acrylonitrile; methacrylonitrile; and maleimides, such as N-cyclohexyl maleimide, N-phenylamaleimide, or maleimide. Preferably, however, the polyvinyl chloride extender particles are vinyl chloride homopolymers. Polyvinyl chloride polymers can be prepared by suspension polymerization or other techniques as is known in the art and are commercially available from a number of suppliers. One useful polyvinyl chloride resin extender particle is Geon 217 available from Poly One Corporation.

The polyvinyl chloride extender particles have an average particle size in a range from 20 to 60 microns. The polyvinyl chloride extender particles are solid.

Preferably, the polyvinyl chloride extender particles have a Fikentscher K value between about 50 and about 80, more preferably between about 60 and about 70. The Fikentscher K value is determined by solution viscosity measurements and provides a measure of molecular weight. The correlation between the Fikentscher K value and number average molecular weight (Mn) is as follows: a Fikentscher K value of 50 is roughly equal to a Mn of 28,000 and a Fikentscher K value of 80 is roughly equal to a Mn of 80,000.

Polyvinyl chloride extenders tend to be hydrophilic and, thus, when used in an aqueous medium, do not have to be surface-treated like the polyethylene particles disclosed in U.S. Patent No. 4,972, 030 to Bauman, discussed above.

The amount of polyvinyl chloride extender particles in the coating composition of the present invention, on a solids basis, is preferably from about 5 to about 60 weight percent, more preferably from about 25 to about 50 weight percent, based on the total weight of solids of the coating composition.

The coating composition of the present invention is manufactured using techniques known to those skilled in the art of manufacturing paint. Generally, for a waterborne composition, there are four stages in the manufacturing process: a pre-thin stage, a grind stage, a wash stage and a thindown stage.

In the pre-thin stage, the binder resin(s) is/are delivered to a thindown tank, along with defoamer and chase water. Typically, a primary binder resin and one or more secondary binder resins are used. The primary binder resin is present in a significantly greater amount than the secondary binder resins and is the primary source of formula adhesion. The secondary binder resin(s) are present in much smaller volumes and are generally added to further enhance coating properties. The binder resin(s), the chase water and defoamer are mixed together in the thindown tank under low shear conditions to form a pre-thin mixture.

In the grind stage, the polyvinyl chloride extender particles (and any other dry raw materials that would not homogenize under low-shear mixing) are dispersed in a mill under high shear conditions into a vehicle comprising water and one or more dispersant(s), which may be anionic and/or nonionic. As is known in the art, nonionic dispersants are protective colloids that contain a hydrophilic group, such as polyethylenoxide, and a hydrophobic group, such as a hydrocarbon chain. Also, as is known in the art, anionic dispersants include low molecular weight molecules like amine alcohols (such as aminomethyl propanol), phosphate salts (such as tetrapotassiumpyrophosphate) and polymeric compositions of polycarboxylic acid or polycarboxylic acid copolymers. The process of dispersing breaks up agglomerates of polyvinyl chloride extender particles to form a better particle distribution, and wets the polyvinyl extender particles with the vehicle. Such wetting inhibits the reagglomeration of the polyvinyl chloride pigment particles.

In the wash stage, water is pumped into the mill to clean the mill and chase the grind paste into the thindown tank.

In the thindown stage, the grind paste, the chase water and the pre-thin mixture are blended together in the thindown tank under low shear conditions. Additional components may also be added, such as thickeners, coalescing aids, biocides, anti-foaming agents, freeze-thaw additives, and colorants. Flow control agents are generally added to control the flow and leveling properties of the composition. Once prepared, the coating composition concentrate is further let down with reducing solvent, water, and generally a small amount of coalescing solvent.

It should be appreciated that the present invention is not limited in any manner to the foregoing method of manufacturing the coating composition. Other manufacturing methods may be used. For example, a continuous paint manufacturing method utilizing component slurries may be used to manufacture the coating composition of the present invention.

In a first embodiment of the present invention, the coating composition is a "flat" or "satin" waterborne architectural paint composition having an ultra deep color.

Flat deep color paints are derived from ultra deep bases, also known as neutral bases. Typically, flat neutral bases contain little or no opacifying pigmentation, such as titanium dioxide (TiO₂), but contain high levels of large particle size extenders, such as calcium carbonate, clays and silica, which are added at high levels to produce a matte, low gloss appearance.

While conventional flat deep color paints have a pleasing appearance, they possess very poor burnish and mar resistance compared to other standard coating systems. The slightest insult will easily and irreversibly damage them. Applicants believe that the poor durability of conventional flat deep color paints when washed or wiped or otherwise brushed against is due mostly to the type and level of extenders that are used in the flat neutral bases from which the flat deep color paints are derived. Applicants believe that the conventional inorganic extenders are easily rearranged or even dislodged from the film surface, thereby burnishing the paint film.

Applicants have observed that when a paint film is burnished, two different effects can be produced; an area of white or lighter color can be formed in the paint film and/or the sheen of a portion of the paint film can be significantly increased. The formation of the white or lighter color shall hereinafter be referred to as color burnish, while the increase in sheen shall hereinafter be referred to as sheen burnish. Applicants used scanning electron micrographs to observe color burnish and sheen burnish in a number of different paint films.

Based on applicants'observations with scanning electron micrographs, and without being limited by any particular theory, applicants believe that color burnish is caused by the formation of air voids in the paint film, which are created when extender particles are dislodged from the paint film and/or the binder is broken up. If some or all of the air voids are near the effective size for light scattering (about 0.3 microns), then the white color is produced (in dark colors, areas of lighter color are formed).

Based on applicants' observations with scanning electron micrographs, and without being limited by any particular theory, applicants believe that sheen burnish is caused by the flow of binder over the extender particles, which occurs when the extender particles do not sufficiently protect the binder from damage. For example, the extender particles may be broken off and/or pushed into the binder. If the surface is significantly smoother after burnishing, there will be an increase in sheen.

For the foregoing reasons, applicants believe that the burnish resistance of a paint film is affected by the nature of the extender particles used in the paint film and their interaction with the binder.

Applicants found that by using polyvinyl chloride extender particles (in a certain size range) in place of typical inorganic extenders, the burnish and mar resistance of flat deep color paints can be significantly improved. Applicants also found that the use of such polyvinyl chloride extenders can improve the scrub resistance and washability of flat deep color paints. Without being limited by any particular theory, the applicants believe these improved performance properties are due to the size of the polyvinyl chloride extender particles as well as the physical and chemical properties of the polyvinyl chloride extender particles.

The polyvinyl chloride extenders particles are solid, generally spherical and have an average particle size in a range of from 20 microns to 60 microns, preferably from about 30 microns to 60 microns, still more preferably from about 30 microns to about 50 microns. With such a size, the polyvinyl chloride extender particles protect the paint film and make it flat, without giving the paint film a textured appearance. More specifically, the polyvinyl chloride extender particles protrude above the binder surface, making the paint film rough and thereby reducing the sheen of the paint film. Since the polyvinyl chloride extender particles protrude above the binder surface, the polyvinyl chloride extender particles reduce the amount of contact between the binder and a burnishing element being moved over the paint film, thereby protecting the paint film. The polyvinyl chloride extender particles are tough and do not break apart when they are contacted with the burnishing element. The polyvinyl chloride extender particles, however, are sufficiently elastic to permit the polyvinyl chloride extender particles to flex and deform rather than be pulled out of the paint film when they are contacted by the burnishing element. This is surprising, considering that polyvinyl chloride is a relatively hard polymer (having a Tg of about 80°C). The polyvinyl chloride extender particles also interact quite well with acrylic and vinyl acrylic binder systems, thereby further enhancing the burnish resistance of paint films utilizing the polyvinyl chloride extender particles.

The amount of polyvinyl chloride extender particles in the first embodiment of the coating composition, on a solids basis, is preferably from about 25 to about 50 weight percent, more preferably from about 35 to about 45 weight percent, based on the total weight of solids of the coating composition.

In accordance with the first embodiment, the coating composition contains little, if any opacifying pigments, such as titanium dioxide (TiO₂). If present, the amount of opacifying pigments in the coating composition of the present invention, on a solids basis, is preferably less than 25 weight percent, based on the total weight of solids of the coating composition. More preferably, however, the coating composition contains no opacifying pigments.

The binder resin of the coating composition of the first embodiment is a latex preferably formed from vinyl monomers and/or acrylic monomers. If the coating composition is for exterior application, the binder resin is preferably an all acrylic latex. If the coating composition is for interior application, the binder resin is preferably a vinyl acrylic latex, i.e., a latex formed from monomers comprising at least 50% by weight of vinyl acetate, with the remaining monomers being selected from the esters of acrylic or methacrylic acid. Examples of commercially available vinyl acrylic polymer resins include Res 3083 and Rovace 661 from Rohm & Haas Company and UCAR 6045, from Union Carbide Corp.

Preferably, the coating composition of the first embodiment includes a flatting agent comprising small solid particles of material that are insoluble in water and are effective to reduce gloss. The individual particles of the flatting agent have a size smaller than the polyvinyl chloride extender particles. Preferably, the flatting agent particles have a size of from about 0.05 to about 10 microns, but may be present in clumps or agglomerates of up to about 50 microns. The flatting agent particles may be inorganic or organic. Examples of suitable inorganic flatting agents include silicates, such as talc, and various forms of silica, such as amorphous, aerogel, diatomaceous, hydrogel and fumed silicas. Examples of suitable organic flatting agents include insoluble urea-formaldehyde resins, polyethylene, polypropylene, cellulosic fibers and polyurethane/polyurea copolymers. Preferably, the flatting agent comprises urea-formaldehyde resin particles that have an individual particle size of from about 0.5 to about 2 microns, but that may be present in clumps or agglomerates of up to about 10 microns. Examples of urea-formaldehyde resin particles that may be used are disclosed in U.S. Patent No. 3,943,080 to Wismer et al.,. A commercially available flatting agent comprising urea-formaldehyde resin particles that may be used is sold by Bergen Materials, Corp. under the trademark BERMASILK^{™}. The BERMASILK^{™} flatting agent comprises particles of a methylenediaminomethylether polycondensate polymer of urea and formaldehyde.

The amount of flatting agent in the first embodiment of the coating composition, on a solids basis, is preferably from about 1 to about 10 weight percent, more preferably from about 2 to about 6 weight percent, still more preferably about 3 to about 5 weight percent based on the total weight of solids of the coating composition.

In order to produce an ultra deep color, the coating composition of the first embodiment is tinted with one or more tinting concentrates, typically in a total amount of from about 8 to about 12 ounces per gallon of the coating composition.

The first embodiment of the coating composition preferably has a PVC of from about 10 percent to about 70 percent, more preferably from about 30 percent to about 50 percent, still more preferably from 35 to about 45 percent. The total solids by weight of the waterborne composition is preferably from about 20 percent to about 60 percent, more preferably from about 30 percent to about 50 percent, still more preferably from about 35 to about 45 percent.

Depending upon the precise formulation, the first embodiment of the coating composition may form dried paint films ranging from a very flat paint film, having a 60 and 85 degree gloss below 2, to a satin paint film, having a 60 and 85 degree gloss of about 25, all with exceptional burnish and mar resistance. In exterior applications, the coating composition additionally provides improved color retention over conventional flat deep color exterior paints.

The present invention will be better understood by reference to the following examples, which are provided for purposes of illustration only and are not to be construed as limiting the scope of the present invention.

### Example 1:

A first neutral base composition embodied in accordance with the present invention (hereinafter "First Inventive Base Composition") was produced from the following components:

| Component | Parts (by weight) | Description |
|---|---|---|
| (a.) | 311.50 | Res 3083 |
| (b.) | 10.00 | defoamer |
| (c.) | 363.87 | Water |
| (d.) | 2.00 | Min-U-Gel 400 |
| (e.) | 12.00 | Hydroxyethyl cellulose |
| (f.) | 0.50 | In-can preservative |
| (g.) | 2.50 | 2-amino-2-methyl-1-propanol |
| (h.) | 8.00 | anionic dispersant |
| (i.) | 5.00 | non-ionic dispersant |
| (j.) | 15.00 | Bermasilk |
| (k.) | 130.00 | Geon 217 |
| (l.) | 12.50 | Texanol |
| (m.) | 25.00 | associative thickener |
| Total | 897.87 | |
| ^{a} Res 3083 is a vinyl acrylic latex available from Rohm and Haas | | |
| ^{d} Min-U-Gel 400 is attapulgite clay available from the Floridin Company | | |
| ^{j} Bermasilk are particles of a methylenediaminomethylether polycondensate polymer of urea and formaldehyde, available from Bergen Materials, Corp. | | |
| ^{k} Geon 217 are particles of a vinyl chloride homopolymer having an average particle size of about 35 microns and a K-value of 67, available from PolyOne Corporation | | |
| ^{l} Texanol is a 12 carbon ester alcohol available from Eastman Chemical | | |

A "First Inventive Paint Composition" was formed from the First Inventive Base Composition by adding 10 ounces of a blue tinting concentrate to one gallon of the First Inventive Base Composition. The First Inventive Paint Composition has a PVC of 40.68% and an NVM (non volatile matter content) of 39.29%. The First Inventive Paint Composition is a flat deep color architectural paint suited for use on interior walls.

### Example 2.

A second neutral base composition embodied in accordance with the present invention (hereinafter "Second Inventive Base Composition") was produced from the following components:

| Component | Parts (by weight) | Description |
|---|---|---|
| (a.) | 310.00 | Commercially available Acrylic latex A |
| (b.) | 7.00 | Defoamer |
| (c.) | 348.07 | Water |
| (d.) | 4.00 | Min-U-Gel 400 |
| (e.) | 6.75 | Hydroxyethyl cellulose |
| (f.) | 1.00 | In-can preservative |
| (g.) | 3.50 | 2-amino-2-methyl-1-propanol |
| (h.) | 8.00 | Anionic surfactant |
| (i.) | 3.00 | Nonionic surfactant |
| (j.) | 160.52 | CP 501 |
| (k.) | 17.52 | Bermasilk |
| (l.) | 18.00 | Propylene Glycol |
| (m.) | 12.00 | Texanol |
| (n.) | 5.00 | Associative thickener |
| (o.) | 2.50 | Troysan Polyphase AF-1 |
| Total | 906.86 | |
| ^{d} Min-U-Gel 400 is attapulgite clay available from the Floridin Company | | |
| ^{j}CP 501 are particles of a vinyl chloride homopolymer having an average particle size of about 45 microns and a K-value of 66, available from Colorite Specialty Resins | | |
| ^{k} Bermasilk are particles of a methylenediaminomethylether polycondensate polymer of urea and formaldehyde, available from Bergen Materials, Corp. | | |
| ^{m} Texanol is a 12 carbon ester alcohol available from Eastman Chemical | | |
| ^{o} Troysan Polyphase AF-1 is a fungicide comprising 3-iodo-2-propynyl-N-butylcarbamate (IPBC), available from Troy Chemical Corporation | | |

### Example 3.

A deep base composition embodied in accordance with the present invention (hereinafter "Third Inventive Base Composition) was produced from the following components:

| Component | Parts (by Weight) | Description |
|---|---|---|
| (a.) | 284.00 | Commercially utilized alkyd A |
| (b.) | 214.00 | 140 Flash naptha |
| (c.) | 10.00 | Organoclay thickener |
| (d.) | 3.50 | Propylene Carbonate |
| (e.) | 3.00 | Soya Lecithin |
| (f.) | 12.0 | 12% Calcium Carboxylate |
| (g.) | 1.00 | Defoamer |
| (h.) | 65.00 | R900 TiO2 |
| (i.) | 26.00 | Bermasilk |
| (j.) | 240.00 | Geon 217 |
| (k.) | 1.00 | 12% Cobalt Cataylst |
| (l.) | 3.00 | Methyl Ethyl Ketoxime |
| Total | 862.50 | |

### Comparative Example 1.

A first conventional neutral base composition (hereinafter "First Conventional Base Composition") was produced from the following components:

| Component | Parts (by weight) | Description |
|---|---|---|
| (a.) | 336.30 | Rovace 661 |
| (b.) | 8.00 | Defoamer |
| (c.) | 355.13 | Water |
| (d.) | 4.00 | Min-U-Gel 400 |
| (e.) | 1.00 | Hydroxyethyl cellulose |
| (f.) | 0.50 | In-can preservative |
| (g.) | 4.00 | Anionic dispersant |
| (h.) | 2.00 | Non-ionic dispersant |
| (i.) | 4.50 | 2-amino-2-methyl-1-propanol |
| (j.) | 165.00 | Crystalline Silica (30 microns) |
| (k.) | 50.00 | Calcined Diatomaceous Silica |
| (l.) | 14.00 | Ethylene Glycol |
| (m.) | 17.00 | Texanol |
| (n.) | 25.00 | Associative thickener |
| Total | 986.43 | |
| ^{a} Rovace 661 is a vinyl acrylic latex available from Rohm and Haas | | |
| ^{d} Min-U-Gel 400 is attapulgite clay available from the Floridin Company | | |
| ^{m}Texanol is a 12 carbon ester alcohol available from Eastman Chemical | | |

A "First Comparative Paint Composition" was formed from the First Conventional Base Composition by adding 10 ounces of a blue tinting concentrate to one gallon of the First Conventional Base Composition. The First Comparative Paint Composition has a PVC of 34.96% and an NVM (non volatile matter content) of 43.03%. The First Comparative Paint Composition is a flat deep color architectural paint suited for use on interior walls.

### Comparative Example 2.

A second neutral base composition (hereinafter "Second Comparative Base Composition") was produced from the following components:

| Component | Parts (by weight) | Description |
|---|---|---|
| (a.) | 310.00 | Commercially available Acrylic latex A |
| (b.) | 7.00 | Defoamer |
| (c.) | 348.57 | Water |
| (d.) | 4.00 | Min-U-Gel 400 |
| (e.) | 6.75 | Hydroxyethyl cellulose |
| (f.) | 1.00 | In-can preservative |
| (g.) | 3.50 | 2-amino-2-methyl-1-propanol |
| (h.) | 8.00 | anionic dispersant |
| (i.) | 3.00 | nonionic dispersant |
| (j.) | 270.00 | Minex 4 |
| (k.) | 55.00 | Iceberg |
| (l.) | 18.00 | Propylene Glycol |
| (m.) | 12.00 | Texanol |
| (n.) | 5.00 | Urethane-modified thickener |
| (o.) | 2.50 | Troysan Polyphase AF- |
| Total | 1054.32 | |
| ^{d} Min-U-Gel 400 is attapulgite clay available from the Floridin Company | | |
| ^{j} Minex 4 is Nepheline Syenite, available from Unimin Corporation | | |
| ^{k} Iceberg is kaolin, available from Burgess Pigment Company | | |
| ^{m} Texanol is a 12 carbon ester alcohol available from Eastman Chemical | | |
| ^{o} Troysan Polyphase AF-1 is a fungicide comprising 3-iodo-2-propynyl-N-butylcarbamate (IPBC), available from Troy Chemical Corporation | | |

### Comparative Example 3.

A third deep base composition (hereinafter "Third Comparative Base Composition") was produced from the following components:

| Component | Parts (by Weight) | Description |
|---|---|---|
| (a.) | 284.00 | Commercially utilized alkyd A |
| (b.) | 214.00 | 140 Flash naptha |
| (c.) | 10.00 | Organoclay thickener |
| (d.) | 3.50 | Propylene Carbonate |
| (e.) | 3.00 | Soya Lecithin |
| (f.) | 12.0 | 12% Calcium Carboxylate |
| (g.) | 1.00 | Defoamer |
| (h.) | 65.00 | R900 TiO2 |
| (i.) | 236.00 | Calcium Carbonate |
| (j.) | 42.00 | Calcined Clay |
| (k.) | 148.00 | Flaky Talc |
| (l.) | 74.00 | Minex 4 |
| (m.) | 1.00 | 12% Cobalt Cataylst |
| (n.) | 3.00 | Methyl Ethyl Ketoxime |
| Total | 1096.50 | |
| ^{h} R900 is a Ti02 | | |
| ^{l} Minex 4 is nepheline Syenite, available from Unimin Corporation | | |

### TESTING

### Burnish Resistance

The First and Third Inventive Paint Composition and the First and Third Comparative Paint Composition were tested for burnish resistance using the procedure described below.

The Inventive Paint Compositions and the Comparative Paint Compositions were drawn down lengthwise, 7 mils wet, over separate Leneta scrub panels and allowed to dry for 7 days at ambient conditions. The dried panels were each placed on glass in a Gardco washability tester - Model D (abrasion tester) and burnished for 200 cycles using cheese cloth (Grade 20B from DeRoyal Textiles) wrapped around a Gardco abrasion boat. The 60 deg. gloss and 85 deg. sheen of each panel was measured before and after the burnishing. Similarly, the color change (ΔE) of each panel was measured before and after the burnishing.

The results of the foregoing test are set forth in the following table:

| **Composition** | **Initial Gloss/Sheen** | **Final Gloss/Sheen** | **% Difference Gloss/Sheen** | **Color Change ΔE** |
|---|---|---|---|---|
| First Inventive Paint Composition | 0.5/0.6 | 0.6/0.9 | 20%/50% | 0.44 |
| First Comparative Paint Composition | 0.5/0.7 | 1.0/2.4 | 100%/243% | 27.90 |

| **Composition** | **Initial Gloss/Sheen** | **Final Gloss/Sheen** | **% Difference i Gloss/Sheen** | **Color Change ΔE** |
|---|---|---|---|---|
| Third Inventive Paint Composition | 0.3/0.5 | 0.4/0.8 | 33%/60% | 0.23 |
| Third Comparative Paint Composition | 0.9/5.1 | 1.8/10.4 | 100%/104% | 2.94 |

### Mar Resistance

The First and Third Inventive Paint Composition and the First and Third Comparative Paint Composition were tested for plastic and metal mar resistance using the procedures described below, which are based on ASTM D 5178.

The Inventive Paint Compositions and the Comparative Paint Compositions were drawn down lengthwise, 7 mils wet, over separate Leneta scrub panels and allowed to dry for 7 days at ambient conditions. After drying, two 3X5 inch pieces were cut from the panel.

A first piece was tested for plastic mar resistance with a Gardner Balanced Beam Scrape Adhesion and Mar Tester. The tester was equipped with a plastic guitar pick with the pointed side up to the Dime Adapter. The guitar pick was placed into contact with the first piece. Without the base plate, a 2000 gram weight was applied and the first piece was pulled beneath the stylus. The first piece was then rated on a scale of 0 to 5, where 5 is perfect and 0 is poor or the film is removed.

A second piece was tested for metal mar resistance with a Gardner Balanced Beam Scrape Adhesion and Mar Tester. The tester was equipped with a dime that had been cut almost in half. The dime was held in place with the Dime Adapter. The cut edge of the dime was placed into contact with the second piece. Without the base plate, a 2000 gram weight was applied and the second piece was pulled beneath the stylus. The second piece was then rated on a scale of 0 to 5, where 5 is perfect and 0 is poor or the film is removed.

The results of the foregoing test are set forth in the following table:

| **Composition** | **Metal Mar Rating** | **Plastic Mar Rating** |
|---|---|---|
| First Inventive Paint Composition | 4.5 | 5.0 |
| First Comparative Paint Composition | 1.0 | 3.0 |

| **Composition** | **Metal Mar Rating** | **Plastic Mar Rating** |
|---|---|---|
| Third Inventive Paint Composition | 4.0 | 5.0 |
| Third Comparative Paint Composition | 2.0 | 3.0 |

### Color Retention

The Second Inventive Base Composition and the Second Comparative Base Composition were tested for color retention using the procedure described below.

Samples of the Second Inventive Base Composition and the Second Comparative Base Composition were tinted with various tinting concentrates in an amount of 10 ounces of tinting concentrate per gallon of sample, thereby forming a plurality of Inventive Exterior Paint Compositions and a plurality of Comparative Exterior Paint Compositions. Each of the Inventive Exterior Paint Compositions and Comparative Exterior Paint Compositions were applied to aluminum panels by brush applicator and allowed to dry for 1 week. The panels were then placed in a QUV weatherometer and cycled between a UV light cycle at 60°C for 4 hours using UVA340 bulbs (Radient .77) and a condensation cycle at 50°C for 4 hours. The total cycle time was 1320 hours with about 500 hours of UV light time. After the test, the Inventive Exterior Paint Compositions and the Comparative Exterior Paint Compositions were evaluated by measuring d60 (the change in 60 deg. gloss), d85 (the change in 85 deg. sheen) and the ΔE (total change in color) of the panels. The results are set forth in the following table:

| **Tinting Concentrate** | **Base Compostion** | **d60** | **d85** | **ΔE** |
|---|---|---|---|---|
| Carbon black | Second Inventive Base Composition | 0.2 | 0.2 | 0.67 |
| Carbon black | Second Comparative Base Composition | 0.6 | 0.6 | 3.62 |
| Phthalo-Green | Second Inventive Base Composition | 0.1 | 0.1 | 2.81 |
| Phthalo-Green | Second Comparative Base Composition | 0.5 | 0.6 | 5.04 |
| Phthalo-Blue | Second Inventive Base Composition | 0.1 | 0.1 | 1.53 |
| Phthalo-Blue | Second Comparative Base Composition | 0.6 | 0.5 | 4.72 |
| Yellow Iron Oxide | Second Inventive Base Composition | 0.2 | 0.1 | 2.11 |
| Yellow Iron Oxide | Second Comparative Base Composition | 0.5 | 0.5 | 1.02 |
| Organic Red | Second Inventive Base Composition | 0.1 | 0.0 | 2.84 |
| Organic Red | Second Comparative Base Composition | 0.6 | 0.8 | 2.52 |
| Umber | Second Inventive Base Composition | 0.1 | 0.0 | 2.25 |
| Umber | Second Comparative Base Composition | 0.5 | 0.6 | 2.53 |
| White-Black | Second Inventive Base Composition | 0.1 | 0.0 | 1.71 |
| White-Black | Second Comparative Base Composition | 0.6 | 0.7 | 0.46 |
| Red Iron Oxide | Second Inventive Base Composition | 0.1 | 0.1 | 2.23 |
| Red Iron Oxide | Second Comparative Base Composition | 0.6 | 0.8 | 3.64 |
| Organic Red | Second Inventive Base Composition | 0.2 | 0.1 | 1.41 |
| Organic Red | Second Comparative Base Composition | 0.7 | 0.7 | 3.99 |

### Tannin Resistance

The Second and Third Inventive Base Composition and the Second and Third Comparative Base Composition were tested for tannin bleed resistance using a procedure described below.

To a 6 X 36 inch redwood board was applied alternating 6X6 inch sections of brush applied (natural spread rate) Inventive Base Compositions and Comparative Base Compositions. After drying over night a topcoat of Sherwin-Williams A-100 flat exterior latex paint was applied to the compositions at natural spread rate. The top coated board was allowed to dry overnight. The coated surface of the red wood board was then exposed over night to moisture from a Cleveland Condensing Cabinet with water maintained at 60C. Under these conditions tannin from the redwood was allowed to migrate to the coating surface. The average level or degree of tannin migration to the surface was measured with a color eye by Delta E (total color change) or Y reflectance. The larger the Delta E and/or the lower the Y reflectance, the greater the amount of tannin bleed. The results are shown in the table below. The Y reflectance of the A-100 topcoat is 85.

| **Composition** | **Delta E** | **Y Reflectance** |
|---|---|---|
| Second Inventive Paint Composition | 26 | 40 |
| Second Comparative Paint Composition | 39 | 51 |

| **Composition** | **Delta E** | **Y Reflectance** |
|---|---|---|
| Third Inventive Paint Composition | 11 | 76 |
| Third Comparative Paint Composition | 24 | 65 |

While the invention has been shown and described with respect to particular embodiments thereof, those embodiments are for the purpose of illustration rather than limitation.

## Claims

1. A paint composition comprising:
a liquid binder resin; and
about 5 to about 60 weight percent, based on the total weight of solids of the paint composition, of solid polyvinyl chloride extender particles having an average particle size In a range from 20 to 60 microns; and a color pigment; and
wherein the paint composition Is free of plasticizers.

2. The paint composition of claim 1, wherein the binder resin is a latex polymer formed by emulsion polymerization of at least one ethylenically unsaturated monomer.

3. The paint composition of claim 2, wherein the binder resin is formed from at least one monomer selected from the group consisting of vinyl monomers, acrylic monomers, acid-functional monomers, allylic monomers, acrylamide monomers and mixtures of the foregoing.

4. The paint composition of claim 1 further comprising about 1 to about 10 weight percent, based on the total weight of solids of the paint composition, of a flatting agent

5. The paint composition of claim 4, wherein the flatting agent Is selected from the group consisting of silicates, silica, urea-formaldehyde resins, polyethylene, polypropylene, cellulosic fibers, polyurethane/polyurea copolymers and mixtures of the foregoing.

6. The paint composition of claim 4, wherein the flatting agent comprises urea-formaldehyde resin particles.

7. The paint composition of claim 1, wherein the paint composition is free of opacifying pigments.

8. The paint composition of claim 7, further comprising a tinting concentrate, wherein the tinting concentrate is present in an amount of from about 8 to about 12 ounces per gallon of the paint composition.

9. The paint composition of claim 1, wherein the paint composition comprises about 25 to about 50 weight percent, based on the total weight of solids of the paint composition, of the polyvinyl chloride extender particles.

10. The paint composition of claim 1, wherein the polyvinyl chloride extender particles are homopolymers of vinyl chloride.

11. The paint composition of claim 1, wherein the paint composition is a waterborne paint composition.

12. The paint composition of claim 1, wherein the paint composition is a waterborne paint composition comprising:
on a solids basis, about 5 to about 50 weight percent, based on the total weight of solids of the waterborne paint composition, of a waterborne binder resin; and
about 25 to about 50 weight percent, based on the total weight of solids of the waterborne paint composition, of solid polyvinyl chloride extender particles having an average particle size in a range from 20 to 60 microns;
a flatting agent; and
a color pigment,
wherein the paint composition is free of plasticizers.

13. The waterborne paint composition of claim 12, wherein the flatting agent is selected from the group consisting of silicates, silica, urea-formaldehyde resins, polyethylene, polypropylene, cellulosic fibers, polyurethane/polyurea copolymers and mixtures of the foregoing;

14. The waterborne paint composition of claim 12, wherein the waterborne paint composition is free of opacifying pigments.

15. The waterborne paint composition of claim 13, wherein the flatting agent comprises urea-formaldehyde resin particles.

16. The waterborne paint composition of claim 12, wherein the waterborne binder resin is formed from at least one monomer selected from the group consisting of vinyl monomers, acrylic monomers, acid-functional monomers, allylic monomers, acrylamide monomers and mixtures of the foregoing.

17. The waterborne paint composition of claim 12, wherein the polyvinyl extender particles have an average particle size in a range from about 30 to about 60 microns.

18. The waterborne paint composition of claim 17, wherein the polyvinyl extender particles have an average particle size in a range from about 30 to about 50 microns.

19. The waterborne paint composition of claim 12, wherein the waterborne paint composition comprises about 35 to about 45 weight percent, based on the total weight of solids of the waterborne paint composition, of the polyvinyl chloride extender particles.

20. The waterborne paint composition of claim 12, wherein the polyvinyl chloride extender particles are homopolymers of vinyl chloride.

21. The waterborne paint composition of claim wherein the polyvinyl chloride extender particles have a Fikentscher K value between about 50 and about 80.

22. The waterborne paint composition of claim 21, wherein the waterborne paint composition forms a dried paint film having a 60 and 85 degree gloss below about 25 when allowed to cure or dry under ambient conditions.

23. A waterborne coating composition comprising:
on a solids basis, about 5 to about 50 weight percent, based on the total weight of solids of the waterborne coating composition, of a waterborne binder resin; and
about 25 to about 50 weight percent, based on the total weight of solids of the waterborne coating composition, of solid polyvinyl chloride extender particles having an average particle size in a range from 20 to 60 microns,
wherein the paint composition is free of plasticizers.

24. The waterborne coating composition of claim 23, further comprising a color pigment.

25. The waterborne coating composition of claim 24 further comprising a flatting agent

26. The waterborne coating composition of claim 25 wherein the flatting agent comprises urea-formaldehyde resin particles.

27. A method of coating a substrate which comprises:
(i) applying to the substrate an ambient curing coating composition comprising:
a liquid binder resin; and
about 5 to about 60 weight percent, based on the total weight of solids of the coating composition, of solid polyvinyl chloride extender particles having an average particle size in a range from 20 to 60 microns; and a color pigment; and
wherein the coating composition is free of plasticizers; and
(ii) allowing the coating to cure or dry under ambient conditions to form a film.

28. The method of claim 27 wherein the coating is applied and allowed to cure or dry at temperatures ranging from about 1.6°C (35°F) to about 37.8°C (100°F).

## Patentansprüche

1. Eine Lackzusammensetzung, enthaltend:
ein flüssiges Bindeharz und
etwa 5 bis etwa 60 Gew.-%, bezogen auf das Gesamtgewicht der Feststoffe der Lackzusammensetzung, feste Polyvinylchlorid-Extenderteilchen mit einer mittleren Teilchengröße in einem Bereich von 20 bis 60 Mikron und
ein Farbpigment, und
wobei die Lackzusammensetzung frei von Plastifizierungsmitteln ist.

2. Die Lackzusammensetzung nach Anspruch 1, wobei das Bindeharz ein Latexpolymer ist, gebildet durch Emulsionspolymerisation von wenigstens einem ethylenisch ungesättigten Monomer.

3. Die Lackzusammensetzung nach Anspruch 2, wobei das Bindeharz aus wenigstens einem Monomer, ausgewählt aus der Gruppe, bestehend aus Vinylmonomeren, Acrylmonomeren, säurefunktionellen Monomeren, Allylmonomeren, Acrylamidmonomeren und Mischungen aus den vorgenannten, gebildet ist.

4. Die Lackzusammensetzung nach Anspruch 1, die ferner etwa 1 bis etwa 10 Gew.-% eines Mattierungsmittels enthält, bezogen auf das Gesamtgewicht der Feststoffe der Lackzusammensetzung.

5. Die Lackzusammensetzung nach Anspruch 4, wobei das Mattierungsmittel ausgewählt ist aus der Gruppe, bestehend aus Silicaten, Kieselsäure, Harnstoff-Formaldehyd-Harzen, Polyethylen, Polypropylen, Cellulosefasern, Polyurethan/Polyharnstoff-Copolymeren und Mischungen aus den vorgenannten.

6. Die Lackzusammensetzung nach Anspruch 4, wobei das Mattierungsmittel Harnstoff-Formaldehyd-Harzteilchen enthält.

7. Die Lackzusammensetzung nach Anspruch 1, wobei die Lackzusammensetzung frei von Deckpigmenten ist.

8. Die Lackzusammensetzung nach Anspruch 7, die ferner ein Abtönkonzentrat enthält, wobei das Abtönkonzentrat in einer Menge von etwa 8 bis etwa 12 Unzen pro Gallone Lackzusammensetzung vorliegt.

9. Die Lackzusammensetzung nach Anspruch 1, wobei die Lackzusammensetzung etwa 25 bis etwa 50 Gew.-% der Polyvinylchlorid-Extenderteilchen enthält, bezogen auf das Gesamtgewicht der Feststoffe der Lackzusammensetzung.

10. Die Lackzusammensetzung nach Anspruch 1, wobei die Polyvinylchlorid-Extenderteilchen Homopolymere von Vinylchlorid sind.

11. Die Lackzusammensetzung nach Anspruch 1, wobei die Lackzusammensetzung eine Wasserlackzusammensetzung ist.

12. Die Lackzusammensetzung nach Anspruch 1, wobei die Lackzusammensetzung eine Wasserlackzusammensetzung ist, enthaltend:
auf Feststoffbasis, etwa 5 bis etwa 50 Gew.-%, bezogen auf das Gesamtgewicht der Feststoffe der Wasserlackzusammensetzung, eines wässrigen Bindeharzes und etwa 25 bis etwa 50 Gew.-%, bezogen auf das Gesamtgewicht der Feststoffe der Wasserlackzusammensetzung, feste Polyvinylchlorid-Extenderteilchen mit einer mittleren Teilchengröße im Bereich von 20 bis 60 Mikron,
ein Mattierungsmittel und
ein Farbpigment,
wobei die Lackzusammensetzung frei von Plastifizierungsmitteln ist.

13. Die Wasserlackzusammensetzung nach Anspruch 12, wobei das Mattierungsmittel ausgewählt ist aus der Gruppe, bestehend aus Silicaten, Kieselsäure, Harnstoff-Formaldehyd-Harzen, Polyethylen, Polypropylen, Cellulosefasern, Polyurethan/Polyharnstoff-Copolymeren und Mischungen aus den vorgenannten.

14. Die Wasserlackzusammensetzung nach Anspruch 12, wobei die Wasserlackzusammensetzung frei von Deckpigmenten ist.

15. Die Wasserlackzusammensetzung nach Anspruch 13, wobei das Mattierungsmittel Harnstoff-Formaldehyd-Harzteilchen enthält.

16. Die Wasserlackzusammensetzung nach Anspruch 12, wobei das wässrige Bindeharz aus wenigstens einem Monomer, ausgewählt aus der Gruppe, bestehend aus Vinylmonomeren, Acrylmonomeren, säurefunktionellen Monomeren, Allylmonomeren, Acrylamidmonomeren und Mischungen aus den vorgenannten, gebildet ist.

17. Die Wasserlackzusammensetzung nach Anspruch 12, wobei die Polyvinyl-Extenderteilchen eine mittlere Teilchengröße in einem Bereich von etwa 30 bis etwa 60 Mikron besitzen.

18. Die Wasserlackzusammensetzung nach Anspruch 17, wobei die Polyvinyl-Extenderteilchen eine mittlere Teilchengröße in einem Bereich von etwa 30 bis etwa 50 Mikron besitzen.

19. Die Wasserlackzusammensetzung nach Anspruch 12, wobei die Wasserlackzusammensetzung etwa 35 bis etwa 45 Gew.-% der Polyvinylchlorid-Extenderteilchen enthält, bezogen auf das Gesamtgewicht der Feststoffe der Wasserlackzusammensetzung.

20. Die Wasserlackzusammensetzung nach Anspruch 12, wobei die Polyvinylchlorid-Extenderteilchen Homopolymere von Vinylchlorid sind.

21. Die Wasserlackzusammensetzung nach Anspruch 20, wobei die Polyvinylchlorid-Extenderteilchen einen Fikentscher-K-Wert zwischen etwa 50 und etwa 80 besitzen.

22. Die Wasserlackzusammensetzung nach Anspruch 21, wobei die Wasserlackzusammensetzung einen getrockneten Lackfilm mit einem 60- und 85-Grad-Glanz von weniger als etwa 25 bildet, wenn man sie unter Umgebungsbedingungen härten oder trocknen lässt.

23. Eine wässrige Beschichtungszusammensetzung, enthaltend:
auf Feststoffbasis, etwa 5 bis etwa 50 Gew.-%, bezogen auf das Gesamtgewicht der Feststoffe der wässrigen Beschichtungszusammensetzung, eines wässrigen Bindeharzes, und
etwa 25 bis etwa 50 Gew.-%, bezogen auf das Gesamtgewicht der Feststoffe der wässrigen Beschichtungszusammensetzung, feste Polyvinylchlorid-Extenderteilchen mit einer mittleren Teilchengröße in einem Bereich von 20 bis 60 Mikron, wobei die wässrige Beschichtungszusammensetzung frei von Plastifizierungsmitteln ist.

24. Die wässrige Beschichtungszusammensetzung nach Anspruch 23, die ferner ein Farbpigment enthält.

25. Die wässrige Beschichtungszusammensetzung nach Anspruch 24, die ferner ein Mattierungsmittel enthält.

26. Die wässrige Beschichtungszusammensetzung nach Anspruch 25, wobei das Mattierungsmittel Harnstoff-Formaldehyd-Harzteilchen enthält.

27. Ein Verfahren zur Beschichtung eines Substrats, umfassend:
(i) Auftragen einer bei Umgebungsbedingungen härtenden Beschichtungszusammensetzung auf das Substrat, wobei die Beschichtungszusammensetzung enthält:
ein flüssiges Bindeharz und
etwa 5 bis etwa 60 Gew.-%, bezogen auf das Gesamtgewicht der Feststoffe der Beschichtungszusammensetzung, feste Polyvinylchlorid-Extenderteilchen mit einer mittleren Teilchengröße in einem Bereich von 20 bis 60 Mikron und ein Farbpigment, und
wobei die Beschichtungszusammensetzung frei von Plastifizierungsmitteln ist, und
(ii) Härten- oder Trocknenlassen der Beschichtung unter Umgebungsbedingungen, um einen Film zu bilden.

28. Das Verfahren nach Anspruch 27, wobei die Beschichtung bei Temperaturen im Bereich von etwa 1,6°C (35°F) bis etwa 37,8°C (100°F) aufgetragen wird und man sie härten oder trocknen lässt.

## Revendications

1. Composition de peinture comprenant:
• une résine liante liquide; et
• environ 5 à environ 60 % en poids, sur la base du poids total des matières solides de la composition de peinture, de particules solides de matière de charge en polychlorure de vinyle ayant une taille de particule moyenne dans une plage allant de 20 à 60 micromètres; et
• un pigment de couleur; et
dans laquelle la composition de peinture est exempte de plastifiants.

2. Composition de peinture selon la revendication 1, dans laquelle la résine liante est un polymère de latex préparé par polymérisation en émulsion d'au moins un monomère à insaturation éthylénique.

3. Composition de peinture selon la revendication 2, dans laquelle la résine liante est préparée à partir d'au moins un monomère choisi dans le groupe comprenant les monomères vinyliques, les monomères acryliques, les monomères à fonctionnalité acide, les monomères allyliques, les monomères acrylamides et les mélanges de ceux-ci.

4. Composition de peinture selon la revendication 1 comprenant en outre environ 1 à environ 10 % en poids, sur la base du poids total des matières solides de la composition de peinture, d'un agent de matité.

5. Composition de peinture selon la revendication 4, dans laquelle l'agent de matité est choisi dans le groupe comprenant les silicates, la silice, les résines urée formaldéhyde, le polyéthylène, le polypropylène, les fibres cellulosiques, les copolymères polyuréthanne/polyurée et les mélanges de ceux-ci.

6. Composition de peinture selon la revendication 4, dans laquelle l'agent de matité comprend des particules de résine urée-formaldéhyde.

7. Composition de peinture selon la revendication 1, dans laquelle la composition de peinture est exempte de pigments opacifiants.

8. Composition de peinture selon la revendication 7, comprenant en outre un concentré de coloration, dans laquelle le concentré de coloration est présent en une quantité d'environ 8 onces par gallon à environ 12 onces par gallon de la composition de peinture.

9. Composition de peinture selon la revendication 1, dans laquelle la composition de peinture comprend environ 25 à environ 50 % en poids, sur la base du poids total des matières solides de la composition de peinture, de particules de matière de charge en polychlorure de vinyle.

10. Composition de peinture selon la revendication 1, dans laquelle les particules de matière de charge en polychlorure de vinyle sont des homopolymères de chlorure de vinyle.

11. Composition de peinture selon la revendication 1, dans laquelle la composition de peinture est une composition de peinture à base d'eau.

12. Composition de peinture selon la revendication 1, dans laquelle la composition de peinture est une composition de peinture à base d'eau comprenant:
• sur une base des matières solides, environ 5 à environ 50 % en poids, sur la base du poids total des matières solides de la composition de peinture à base d'eau, d'une résine liante à base d'eau; et
• environ 25 à environ 50 % en poids, sur la base du poids total des matières solides de la composition de peinture à base d'eau, de particules solides de matière de charge en polychlorure de vinyle ayant une taille de particule moyenne dans une plage allant de 20 à 60 micromètres ;
• un agent de matité;
• et un pigment de couleur,
dans laquelle la composition de peinture est exempte de plastifiants.

13. Composition de peinture à base d'eau selon la revendication 12, dans laquelle l'agent de matité est choisi dans le groupe comprenant les silicates, la silice, les résines urée-formaldéhyde, le polyéthylène, le polypropylène, les fibres cellulosiques, les copolymères polyuréthanne/polyurée et les mélanges de ceux-ci.

14. Composition de peinture à base d'eau selon la revendication 12, dans laquelle la composition de peinture à base d'eau est exempte de pigments opacifiants.

15. Composition de peinture à base d'eau selon la revendication 13, dans laquelle l'agent de matité comprend des particules de résine urée-formaldéhyde.

16. Composition de peinture à base d'eau selon la revendication 12, dans laquelle la résine liante à base d'eau est préparée à partir d'au moins un monomère choisi dans le groupe comprenant les monomères vinyliques, les monomères acryliques, les monomères à fonctionnalité acide, les monomères allyliques, les monomères acrylamides et les mélanges de ceux-ci.

17. Composition de peinture à base d'eau selon la revendication 12, dans laquelle les particules de matière de charge en polyvinyle présentent une taille de particule moyenne dans une plage allant d'environ 30 à environ 60 micromètres.

18. Composition de peinture à base d'eau selon la revendication 17, dans laquelle les particules de matière de charge en polyvinyle présentent une taille de particule moyenne dans une plage allant d'environ 30 à environ 50 micromètres.

19. Composition de peinture à base d'eau selon la revendication 12, dans laquelle la composition de peinture à base d'eau comprend environ 35 à environ 45 % en poids, sur la base du poids total des matières solides de la composition de peinture à base d'eau, de particules de matière de charge en polychlorure de vinyle.

20. Composition de peinture à base d'eau selon la revendication 12, dans laquelle les particules de matière de charge en polychlorure de vinyle sont des homopolymères de chlorure de vinyle.

21. Composition de peinture à base d'eau selon la revendication 20, dans laquelle les particules de matière de charge en polychlorure de vinyle ont une valeur de K selon Fikentscher entre environ 50 et environ 80.

22. La composition de peinture à base d'eau selon la revendication 21, dans laquelle la composition de peinture à base d'eau forme un film de peinture sec ayant un brillant de 60 et 85° inférieur à environ 25 quand on le laisse réticuler ou sécher sous des conditions ambiantes.

23. Composition de revêtement à base d'eau comprenant:
sur une base des matières solides, environ 5 à environ 50 % en poids, sur la base du poids total des matières solides de la composition de revêtement à base d'eau, d'une résine liante à base d'eau; et
environ 25 à environ 50 % en poids, sur la base du poids total des matières solides de la composition de revêtement à base d'eau, de particules solides de matière de charge en polychlorure de vinyle ayant une taille de particule moyenne dans une plage allant de 20 à 60 micromètres,
dans laquelle la composition de peinture est exempte de plastifiants.

24. composition de revêtement à base d'eau selon la revendication 23, comprenant en outre un pigment de couleur.

25. composition de revêtement à base d'eau selon la revendication 24 comprenant en outre un agent de matité.

26. Composition de revêtement à base d'eau selon la revendication 25 dans laquelle l'agent de matité comprend des particules de résine urée-formaldéhyde.

27. Procédé de revêtement d'un substrat qui comprend les étapes consistant à :
(i) appliquer sur le substrat une composition de revêtement réticulant à température ambiante comprenant :
• une résine liante liquide; et
• environ 5 à environ 60 % en poids, sur la base du poids total des matières solides de la composition de revêtement, de particules solides de matière de charge en polychlorure de vinyle ayant une taille de particule moyenne dans une plage allant de 20 à 60 micromètres; et
• un pigment de couleur; et
• dans laquelle la composition de revêtement est exempte de plastifiants; et
(ii) laisser le revêtement réticuler ou sécher sous des conditions ambiantes pour former un film.

28. Procédé selon la revendication 27 dans lequel le revêtement est appliqué et laissé à réticuler ou à sécher à des températures allant d'environ 1,6°C (35°F) à environ 37,8°C (100°F).
